## Europäisches Patentamt

## European Patent Office

## Office européen des brevets

(11) Publication number: **0 076 451**

**A1**

(12) **EUROPEAN PATENT APPLICATION**

(21) Application number: **82108923.2**

(22) Date of filing: **27.09.82**

(51) Int. Cl.³: **F 16 K 11/06**
**F 16 K 27/04**

(30) Priority: **02.10.81 GB 8129838**

(43) Date of publication of application:
**13.04.83 Bulletin 83/15**

(84) Designated Contracting States:
**AT BE CH DE FR GB IT LI LU NL SE**

(71) Applicant: **SHANDON SOUTHERN PRODUCTS LIMITED**
**95-96 Chadwick Road Astmoor Industrial Estate**
**Runcorn Cheshire, WA7 1PR(GB)**

(72) Inventor: **Gordon, Alan John**
**21 Halkyn Avenue**
**Liverpool 17(GB)**

(72) Inventor: **Chetcuti, Raphael Joseph**
**315 Thomas Close**
**Southgate Runcorn(GB)**

(72) Inventor: **Sterritt, David William**
**25 Stanstead Avenue**
**Penketh Warrington Cheshire WA5 2HU(GB)**

(74) Representative: **Jack, Bruce James et al,**
**FORRESTER & BOEHMERT Widenmayerstrasse 41**
**D-8000 Munchen 22(DE)**

(54) **Fluid selector valve.**

(57) A fluid selector valve of the type having two relatively rotatable members (1, 2) indexable to bring a fluid pathway part (12) in one member into alignment with a selected one of a number of individual pathway parts (15) in the other, to set up a selected flowpath through the valve, the flowpath crossing the interface between the members, is characterised by the provision of part venturi-shape constrictions (14) at the terminations of the pathway parts in the respective members so that a venturi throat is formed at the interface, to produce a region of low pressure in fluid crossing the interface by flowing through the aligned pathway parts in the respective members. Fluid leakage at the interface is thereby restricted or prevented.

Fig. 1.

"Fluid Selector Valve"

THIS INVENTION concerns fluid selector valves and more particularly rotary selector valves that allow a through-flow of fluid by mutual alignment of a first (e.g. inlet) pathway with a selected second (e.g. outlet) pathway in respective relatively rotatable members. These valves are useful for controlling the automatic distribution of one or more fluids from individual sources, to one or a number of outlets in turn.

One problem with existing rotary selector valves is in the provision of a reliable seal at the interface of the rotatable members to prevent leakage at the junction between fluid pathway parts at this interface.

The aim of the present invention is to avoid or mitigate this problem of leakage at the interface of the rotatable members.

Thus the invention provides a fluid selector valve comprising relatively rotatable members, one having first pathway means associated therewith and the other having second pathway means associated therewith, said members in at least one selected relative position providing a fluid pathway connecting said first and second pathway means and crossing the interface between said members, characterised in that the said fluid pathway is profiled to provide a venturi throat at the interface of the members.

By reason of the provision of the venturi throat in the fluid pathway, the flow of fluid therethrough results in a reduction of pressure in the fluid at the interface of the relatively rotatable members and thus reduces the problem of preventing leakage of fluid at this interface. By appropriate choice of pathway profile it is possible, for certain combinations of fluid total pressure and flow velocity at the fluid inlet, to create a sub-ambient pressure at the interface junction of the pathway parts and so ensure that any leakage is into the pathway. If the fluid is air or is otherwise compatible with the ambient atmosphere, and such "inwards" leakage is acceptable, the valve need have no seal at the interface to prevent such leakage.

The valve may have a plurality of fluid outlets and corresponding pathway parts in one of the relatively rotatable members movable selectively into registration with a pathway part connected to a fluid inlet in the other member, by relative indexing of the members. Alternatively the valve may have a plurality of fluid inlets and corresponding pathway parts in one of the relatively rotatable members movable selectively into registration with a pathway part connected to a fluid outlet in the other member, by relative indexing of the members.

As the reduced fluid pressure at the interface is obtained by the actual flow of fluid through the aligned pathway parts, this effect will not be obtained under conditions of zero fluid flow, e.g. with the members in relative positions preventing alignment of the pathway parts. Thus the valve cannot, without special provision, function as an on-off valve. However, an on-off function can be achieved by providing two or an even number of fluid outlets, one or each alternate one of which carries fluid towards a required point of use during "on" periods, the other or other alternate outlet(s) carrying fluid during "off" periods but directing such fluid to a suitable receiver so as to maintain a sufficient flow of fluid, for pressure reduction at the interface, through the valve at all times.

The valve may be adapted for automated operation, e.g. by being associated with suitable actuator means for effecting relative rotation of the members.

So that the invention may be more readily understood, an embodiment will be described, by way of example, and with reference to the accompanying drawings in which:

FIGURE 1 is a sectional elevation of a selector valve constituting one embodiment of the invention;

FIGURE 2 is a plan view of the selector valve of Figure 1, illustrating

a pneumatic actuator for indexing the rotatable member of the valve;

FIGURE 3 is an underneath plan view of the selector valve of Figure I;

FIGURE 4 is a plan view of a modified rotatable member having optional position indicators for cooperation with pneumatic proximity switches;

FIGURE 5 is an underneath plan view of the rotatable member of Figure 4;

FIGURE 6 is a cross-section taken on the line VI-VI of Figure 5, showing a pair of pneumatic proximity switches arranged for cooperation with the position indicators of the member of Figure 4;

FIGURE 7 is a sectioned end elevation of the pair of pneumatic proximity switches of Figure 6; and

FIGURE 8 shows schematically one example of an application of the invention as an ON-OFF selector valve.

It must be understood that a selector valve in accordance with the invention can comprise either a single inlet pathway that can be sequentially brought into registration with each of a number of outlet pathways, or a single outlet pathway that can be sequentially brought into registration with each of a number of inlet pathways. However, for ease of description only the first arrangement will be described in detail.

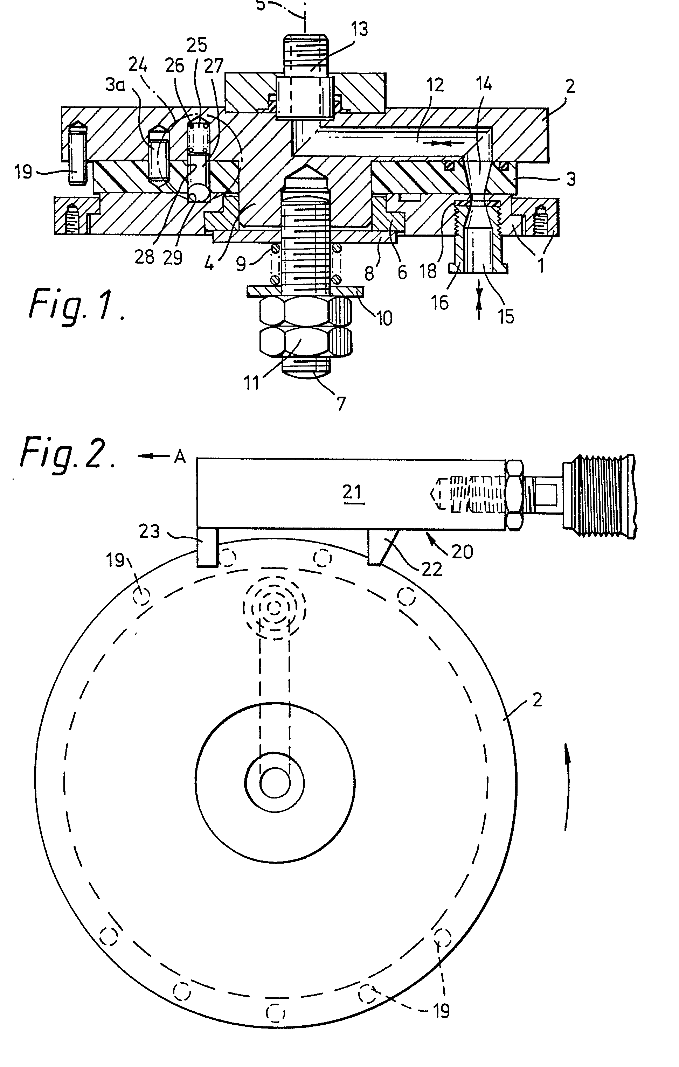

The selector valve as shown in Figures I, 2 and 3 comprises two relatively rotatable members of cylindrical form, viz: a lower fixed plate I and an upper rotating assembly comprising a plate 2 and an annular polytetrafluoroethylene (PTFE) disc 3 fixedly attached to the lower surface of the plate 2 by suitably positioned retaining stud means 3a to be constrained to move therewith. The fixed plate I and rotating assembly are adapted to fit together in axial alignment, a valve joint interface being formed between the upper surface of the fixed plate I and and the lower surface of the PTFE disc 3. As is best seen in Figure 1, the lower surface of the rotating plate 2 has a stepped profile, the diameter of a circular step 4 being such that it passes through a central hole in the PTFE disc 3 and fits into a stepped circular central hole in the fixed plate 1, allowing rotation of the plate 2 about the axis 5. An annular anti-friction bearing 6 having a suitable profile fits into the stepped hole in the fixed plate 1 and acts as a guide for this rotation. A screw-threaded stud 7 is fixedly positioned in the centre of the rotating plate 2 and projects through the hole in the fixed plate 1 and the bearing 6. A thrust washer 8 fits over this stud and the assembly is held together by a spring 9 acting against the thrust washer 8 and a retaining washer 10 held by a locking nut 11 on the stud 7.

An inlet pathway 12 is provided in the rotating plate 2 and associated PTFE disc 3, extending from a rotary coupling 13 at the centre of the upper surface of the rotating plate 2 to an eccentric position at the valve joint interface. Where the pathway 12 is defined in the PTFE disc 3 its bore is tapered to a reduced diameter so as to define one half of a venturi profile 14, and thus enable the formation of a "venturi" throat at the valve joint interface.

The fixed plate 1 has a plurality of outlet pathways, generally indicated 15, that are arranged around the fixed plate 1, at the same radial distance as the profiled portion 14 of the inlet pathway 12 in the PTFE disc 3, so as to be capable of being aligned with the pathway 12 in the latter by rotation of the plate 2 in the manner described below. Each of these outlet pathways extends from the valve joint inlet face to a suitable tubing connector 16. The entry 17 of the outlet pathway 15 has the same diameter as the reduced internal diameter of the venturi profile 14 in the PTFE disc 3. As is best seen in Figure 1, the internal bore of each connector 16 is tapered so that its diameter gradually increases from the reduced diameter of the entry 17 to the initial diameter of the inlet pathway 11. When the inlet and outlet pathways are correctly aligned, so as to form a flow path through the valve, a restricted "venturi" throat is formed at the valve joint interface. A PTFE seal 18 is associated with the tubing connectors 16 to prevent leakage behind the connectors, but no seals are provided to prevent leakage at the valve joint interface. If desired, however, a wiping seal (not shown) can be provided at the interface, to wipe dirt off of the relatively moving components.

A number of indexing pins 19 equal to the number of outlet connectors 16 are positioned circumferentially around the rotating plate 2 and project from the lower surface of the latter to be engaged by actuator means generally indicated 20 for rotating the plate 2 step-by-step in the anticlockwise direction as seen in Figure 2, to move the inlet pathway 12 from alignment with one of outlet pathways into alignment with another of the outlet pathways. As is best seen in Figure 2, the actuator means comprises a pneumatically-actuated piston 21 having two laterally projecting, spaced apart, shoulders 22, 23.

Positioning of the plate 2, and prevention of reverse (clockwise) rotation thereof, is accomplished by a ratchet mechanism generally shown at 24 and that, as is best seen in Figure 1, comprises a recess 25 housing a ratchet spring 26 and a ratchet pin 27. The ratchet pin 27 passes through a hole 28 in the PTFE disc 3 and locates in suitably positioned recesses 29 in the fixed plate 1, there being a recess 29 corresponding to each of the required indexing positions.

In operation the piston 21 moves first in direction A, shoulder 22 engaging an indexing pin 19 and causing the plate 2 to rotate by an amount slightly greater than than the desired amount; on the subsequent return stroke of the piston, shoulder 23 engages the indexing pin 19 rotate the plate 2 in the opposite direction and to the extent permitted by the ratchet mechanism 24 that thereby provides accurate positioning of the plate 2, with respect to the fixed plate 1, after each indexing operation.

As an alternative to the arrangement illustrated, indexing of the plate 2 may be accomplished by a Geneva stop or like mechanism.

In the illustrated embodiment, the single inlet pathway 12 can be sequentially switched between any one of the outlet pathways 15 by bringing the part venturi 14 into alignment with a desired output pathway. When the inlet pathway 12 is correctly aligned with one of the outlets and fluid flows through the pathway, the venturi arrangement prevents or restricts leakage of the fluid via gaps at the interface of the two plates of the valve by producing a pressure drop in the fluid at the restriction.

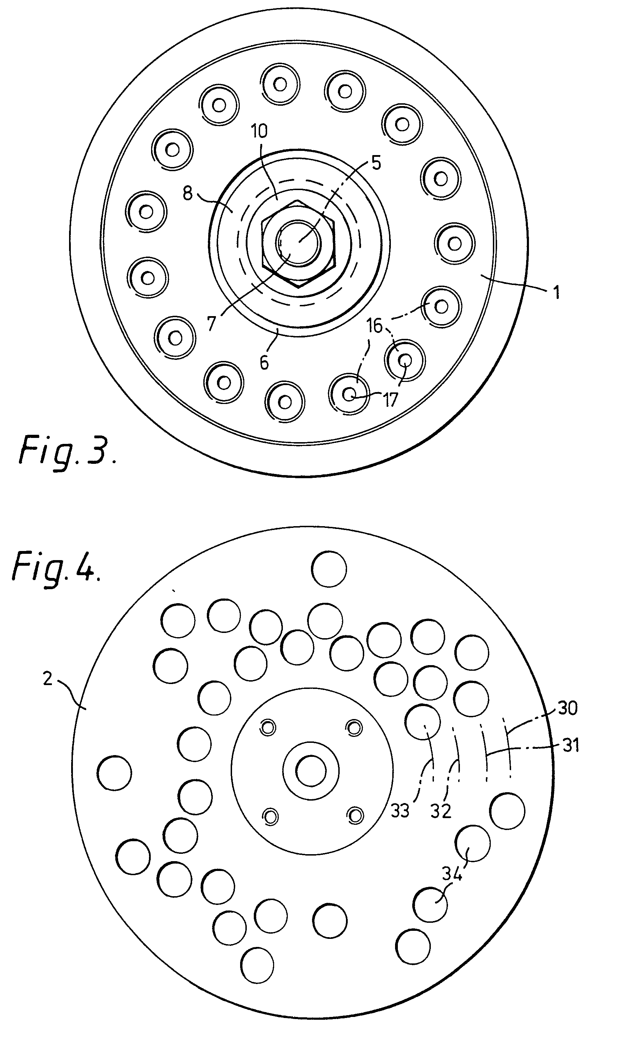

Preferably the valve includes a position sensing system, to enable monitoring of the valve position during successive indexing operations. Such a system is illustrated in Figures 4 to 7 and comprises four pneumatic proximity switches that are arranged to cooperate with a number of position indicators that are radially disposed on the upper surface of the rotating plate 2. As best seen in Figure 4, the position indicators comprise four concentric series, 30 to 33, of blind holes 34 and blanks ("no holes") that are provided on the upper surface of the rotating plate 2. The blind holes 34 preferably have a diameter that is slightly larger than the width of the lower surface of the proximity switches, for a purpose to be explained.

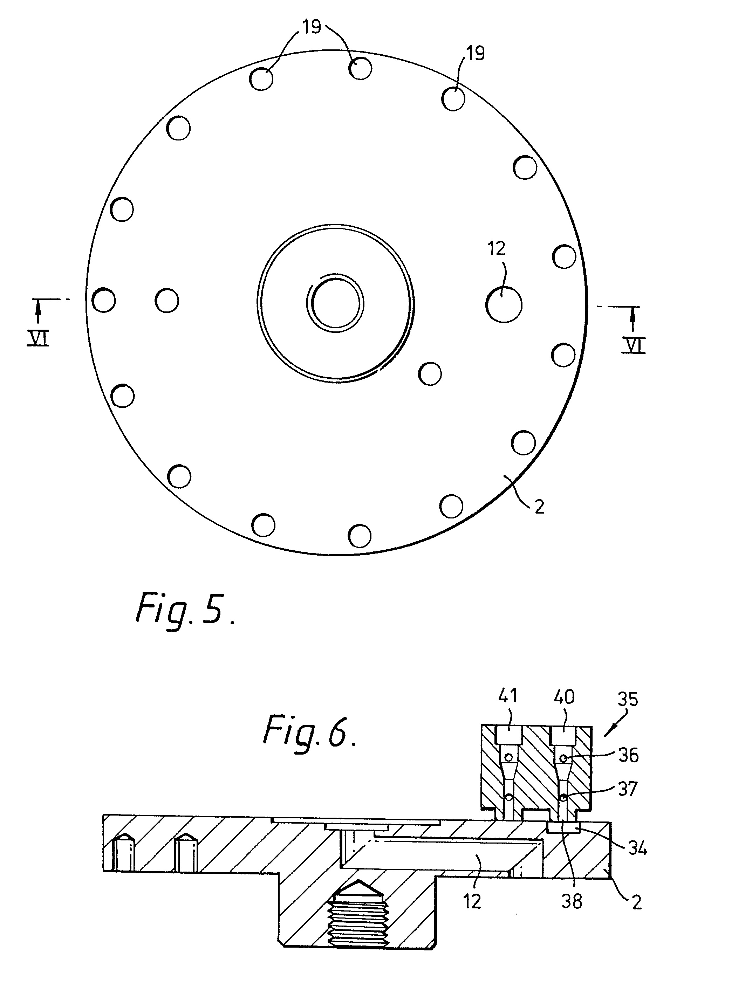

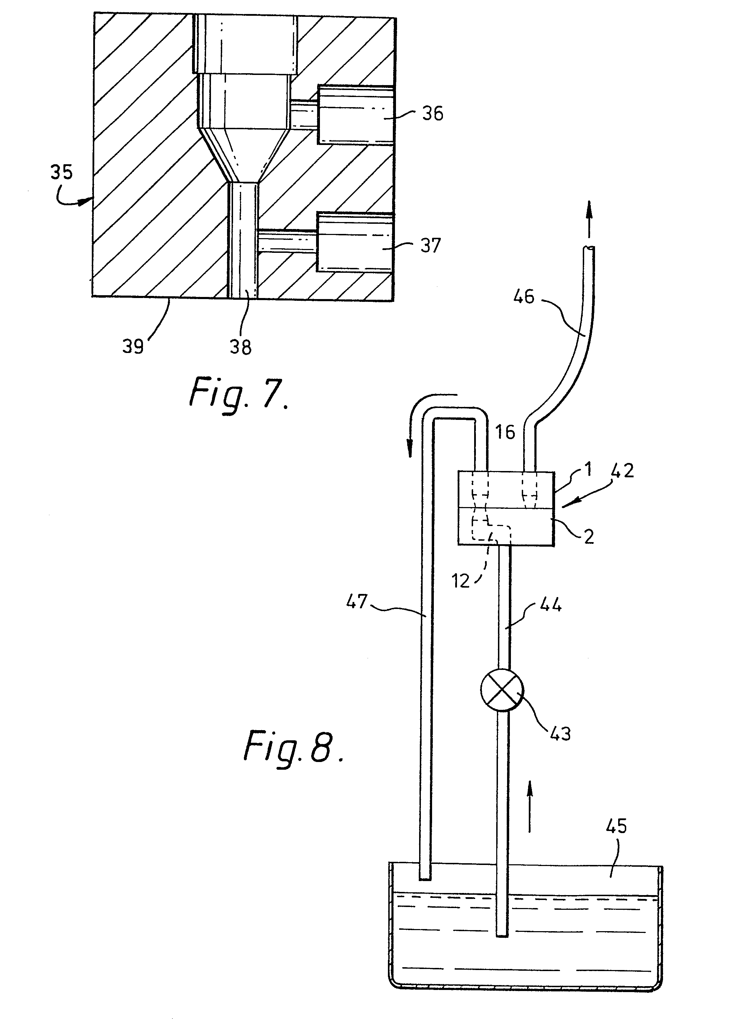

As shown in Figures 6 and 7, each proximity switch 35 has an inlet 36 for connection to a source (not shown) of compressed air, and two outlets, 37 and 38. Outlet 37 is connected to a pressure switch (not shown) and outlet 38 is open to the lower surface 39 of the switch 35. The switches are arranged so that the lower surface 39 is in contact with or in close proximity to the upper surface of the rotating plate 2, each switch cooperating with one of the series of position indicators 30 to 33 to selectively operate the pressure switch: compressed air enters the switch 35 via inlet 36, and if the outlet 38 is aligned with one of the blind holes 34 then the air exits through the hole 34 via outlet 38, and the pressure at outlet 37 does not rise to the value required to operate the pressure switch connected to the outlet 37; however if the outlet 38 is aligned with a blank (i.e. in a "no hole" position) then outlet 38 is restricted and the pressure builds up to the value required at outlet 37 to actuate the pressure switch.

The proximity switches are arranged in pairs along a diameter of the rotating plate 2 and are fixed in position such that the plate 2 rotates beneath them during indexing operations. One pair of switches is positioned on one half of the diameter and arranged such that one switch of the pair reads position indicator series 30 and the other switch of that pair reads position indicator series 32, whilst the other pair of switches is positioned on the other half of the diameter and is arranged such that one switch of that pair reads position indicator series 31 and the other reads position indicator series 33. Figure 6 illustrates the positioning of one pair of proximity switches with respect to the surface of the rotating plate 2 for a given rotational position thereof. A first switch indicated 40 is aligned with a blind hole 34 to provide an "OFF" output signal, whereas the switch 41 is aligned with a "no hole" position so that it provides an "ON" output signal. The pressure switches of the four proximity switches are therefore switched "ON" or "OFF" in a binary code signifying the rotational position of the plate 2. The output signals of the switches can, by interfacing the switches 35 with a suitable decoder, be presented as a denary display for operator reading, and/or be utilized by a microprocessor or the like controlling the operation of the selector valve in accordance with a desired programme.

Figures 4 to 6 illustrate the application of the position sensing system to a selector valve having fifteen outlets, and thus indexing positions. The position sensing system has its concentric series of position indicators spaced at $12^{\circ}$ intervals, two (opposite) pitches coding in combination for each of the indexing positions.

Figure 8 illustrates schematically the application of a selector valve of this invention to provide on-off switching of a fluid supply. The selector valve generally indicated at 42 has a fixed plate 1 having two fluid outlets with tubing connectors 16. A pump 43, suitably positioned in the supply line 44, pumps fluid from a reservoir 45 through the supply line 44 to the inlet pathway 12 of the selector valve. One of the two outlet tubing connectors is connected to a fluid delivery line 46, whereas the other outlet connector 16 is connected to a fluid return pipe 47, that returns fluid to the reservoir 45. This arrangement provides an ON flow when the inlet is indexed to connect with the fluid delivery line 45 and an OFF flow when the inlet is indexed to connect with the return pipe 46.

In a development of this arrangement, there may be several outlets, even in number, alternate outlets being connected to individual delivery lines and the other alternate outlets being connected together to a single return pipe.

A particularly useful application for a selector valve in accordance with the invention exists where a number of liquids are required to be supplied to a vessel in an ordered sequence, e.g. in a tissue processing or (slide) staining histological procedure. A selector valve for such application would have the desired number of inlet pathways in the fixed plate and a single outlet pathway, movable into alignment with each of the inlet pathways in turn.

CLAIMS

1. A fluid selector valve comprising relatively rotatable members, one having first pathway means associated therewith and the other having second pathway means associated therewith, said members in at least one selected relative position providing a fluid pathway connecting said first and second pathway means and crossing the interface between said members, characterised in that the said fluid pathway is profiled to provide a venturi throat at the interface of the members.

2. A fluid selector valve according to claim 1, further characterised by the absence of a seal at the interface of the two said members.

3. A fluid selector valve according to claim 1 or 2, having a plurality of fluid outlets and corresponding pathway parts in one said member and an inlet pathway part in the other member that is movable selectively into registration with any one of the said outlet pathways by relative indexing of the members.

4. A fluid selector valve according to claim 1 or 2, having a plurality of fluid inlets and corresponding pathway parts in one said member and an outlet pathway part in the other member that is movable selectively into registration with any one of the said inlet pathways by relative indexing of the members.

5. A fluid selector valve according to claim 1, 2, 3 or 4, including actuator means for rotating the members relatively to one another.

6. A fluid selector valve according to claim 5, including indexing pins arranged circumferentially on a surface of the rotatable member for cooperation with said actuator means for rotating the members relatively to one another.

7. A fluid selector valve according to claim 6, in which said actuator means comprises a pneumatically actuated piston having first and second laterally projecting shoulders arranged such that on the forward stroke of said piston said first shoulder engages a said indexing pin to rotate the rotatable member in a forward direction, whereas on the return stroke of said piston said second shoulder engages a said indexing pin to rotate said rotatable member in the reverse direction, the valve including a ratchet mechanism adapted to arrest such reverse rotation to accurately locate the relatively rotatable members after each indexing operation.

8.    A fluid selector valve according to any one of the preceding claims, including a position sensing system to indicate the relative positions of said members.

9.    A fluid selector valve according to claim 8, in which the sensing system has a binary output.

10.    A fluid selector valve according to claim 9, including a decoder for converting said binary output to a denary display.

1/4

Fig. 1.

Fig. 2.

Fig.3.

Fig.4.

Fig.5.

Fig.6.

Fig. 7.

Fig. 8.

**EUROPEAN SEARCH REPORT**

**0076451**
Application number

EP 82 10 8923

## DOCUMENTS CONSIDERED TO BE RELEVANT

| Category | Citation of document with indication, where appropriate, of relevant passages | Relevant to claim |
|---|---|---|
| A | --- <br> FR-A-2 439 345 (HANSA METALLWERKE) <br> * claims; point 1; figure 3 * | 1 |
| A | --- <br> FR-A-1 020 557 (MELONI) <br> * page 1, right-hand column, paragraph 7; figures * | 1 |
| A | --- <br> FR-A-2 410 776 (HANSA METALLWERKE) <br> * page 2, line 29 till page 3, line 14; figures * | 1 |
| A | --- <br> GB-A- 928 299 (TEMPLE INSTRUMENTS) <br> * page 2, lines 30-70; figure 1 * | 1 |
| A | --- <br> FR-A-2 054 694 (MARTONAIR) | |
| A | --- <br> GB-A- 932 912 (COMMISSARIAT A L'ENERGIE ATOMIQUE) | |
| A | --- <br> FR-A-1 513 807 (THE ENGLISH ELECTRIC COMP.) | |
| | ----- | |

CLASSIFICATION OF THE APPLICATION (Int. Cl. ³)

F 16 K 11/06
F 16 K 27/04

TECHNICAL FIELDS SEARCHED (Int. Cl. ³)

F 16 K

The present search report has been drawn up for all claims

| Place of search | Date of completion of the search | Examiner |
|---|---|---|
| THE HAGUE | 10-01-1983 | VAN REETH A.L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82